# EUROPÄISCHE PATENTSCHRIFT

(11) **EP 1 783 172 B1**
(45) Veröffentlichungstag und Bekanntmachung des Hinweises auf die Patenterteilung: **14.12.2011**
(21) Anmeldenummer: 06021382.4
(22) Anmeldetag: 12.10.2006
(51) Int. Cl.: C08L 77/00, C08J 3/00, C08L 77/02, C08L 77/06

(54) **Polyamid-Formmassen mit verbesserter Fliessfähigkeit**
Polyamid moulding material with improved flowability
Matières à mouler en polyamide présentant des propriétés rhéologiques améliorées

(30) Priorität: 25.10.2005 DE 102005050958
(43) Veröffentlichungstag der Anmeldung: 09.05.2007
(73) Patentinhaber: LANXESS Deutschland GmbH, 51369 Leverkusen (DE)
(72) Erfinder: Joachimi, Detlev, Dr., 47800 Krefeld (DE); Bienmüller, Wolfgang, Dr., 47803 Krefeld (DE); Endtner, Jochen, Dr., 50679 Köln (DE); Ulrich, Ralph, Dr., 40878 Ratingen (DE); Persigehl, Peter, Dr., Wuxi Jiangsu 214121 (CN); Klingenhöfer, Stefanie, Dr., 47809 Krefeld (DE)

(56) Entgegenhaltungen:
- EP-A1- 1 038 921
- WO-A-2005/121249
- DE-A1-102005 009 200
- US-B1- 6 713 596

## Beschreibung

Diese Erfindung betrifft Formmassen auf Basis mindestens eines teilkristallinen thermoplastischen Polyamids und mindestens eines Copolymerisats aus mindestens einem Olefin, bevorzugt einem α-Olefin, mit mindestens einem Methacrylsäureester oder Acrylsäureester eines aliphatischen Alkohols mit 1 bis 4 Kohlenstoffatomen, wobei der MFI (Melt Flow Index) des Copolymerisats 50 g/10 min nicht unterschreitet, ein Verfahren zur Herstellung dieser Formmassen sowie die Verwendung dieser Formmassen zur Herstellung von Formteilen oder Halbzeugen durch Spritzguss oder Extrusion.

Hochfließfähige thermoplastische Zusammensetzungen sind für eine Vielzahl von Spritzgussanwendungen interessant. Beispielsweise erfordern Dünnwandbauteile in der Elektro-, Elektronik- und Kfz-Industrie niedrige Viskositäten der Thermoplastzusammensetzung, damit ein Füllen der Form bei möglichst geringen Fülldrücken bzw. Schließkräften der entsprechenden Spritzgießmaschinen möglich ist. Dies trifft auch auf das gleichzeitige Füllen von mehreren Spritzgussbauteilen über ein gemeinsames Angusssystem in sogenannten Vielfachwerkzeugen zu. Des weiteren können häufig mit niederviskosen thermoplastischen Zusammensetzungen auch kürzere Zykluszeiten realisiert werden. Darüber hinaus sind gute Fließfähigkeiten gerade auch bei hochgefüllten thermoplastischen Zusammensetzungen beispielsweise mit Glasfaser- und/oder Mineralgehalten von über 40 Gew.-% sehr wichtig.

Trotz hoher Fließfähigkeit der thermoplastischen Zusammensetzungen werden jedoch hohe mechanische Anforderungen an die daraus herzustellenden Bauteile selber gestellt, so dass durch die Viskositätserniedrigung keine signifikante Beeinträchtigung der mechanischen Eigenschaften verursacht werden darf.

Es gibt mehrere Möglichkeiten, hochfließfähige, niederviskose thermoplastische Formmassen zu realisieren.

Eine Möglichkeit ist der Einsatz von niederviskosen Polymerharzen mit geringerem Molekulargewicht als Basispolymere für die thermoplastischen Formmassen. Der Einsatz niedermolekularer Polymerharze ist aber häufig mit Einbußen bei den mechanischen Eigenschaften, insbesondere der Zähigkeit, verbunden. Außerdem erfordert die Herstellung eines niederviskosen Polymerharzes auf einer bestehenden Polymerisationsanlage oftmals aufwändige und mit Investitionen verbundene Eingriffe.

Eine andere Möglichkeit ist der Einsatz von sogenannten Fließhilfsmitteln, auch als Fließmittel, Fließhilfen oder innere Gleitmittel bezeichnet, die dem Polymerharz als Additiv zugegeben werden können.

Derartige Fließhilfsmittel sind aus der Literatur wie z.B. in Kunststoffe 2000, 9, S. 116-118 bekannt und können beispielsweise Fettsäureester von Polyolen oder Amide aus Fettsäuren oder Aminen sein. Derartige Fettsäureester, wie beispielsweise Pentaerythritoltetrastearat oder Ethylenglykoldimontanoat, sind jedoch mit polaren Thermoplasten wie Polyamiden, Polyalkylenterephthalaten oder Polycarbonaten nur begrenzt mischbar. Sie reichern sich daher an der Formteiloberfläche an und werden deshalb auch als Entformungshilfsmittel eingesetzt. Sie können allerdings besonders bei höheren Konzentrationen bei Wärmelagerung oder im Falle von Polyamiden auch bei der Feuchteaufnahme aus diesen Formteilen an die Oberfläche migrieren und sich dort anreichern. Dies kann beispielsweise zu Problemen hinsichtlich Lack- oder Metallhaftung bei beschichteten Formteilen führen.

Alternativ zu den oberflächenaktiven Fließhilfsmitteln können interne Fließhilfsmittel eingesetzt werden, die mit den Polymerharzen verträglich sind. Hierfür eignen sich beispielsweise niedermolekulare Verbindungen oder verzweigte, hochverzweigte oder dendritische Polymere mit einer dem Polymerharz ähnlichen Polarität. Derartige hochverzweigte oder dendritische Systeme sind aus der Literatur bekannt und können beispielsweise auf verzweigten Polyestern, Polyamiden, Polyesteramiden, Polyethern oder Polyaminen basieren, wie sie in Kunststoffe 2001, 91, S. 179-190, oder in Advances in Polymer Science 1999, 143 (Branched Polymers II), S. 1-34 beschrieben sind.

EP-A 0 682 057 beschreibt den Einsatz des stickstoffhaltigen 4-Kaskadendendrimers der ersten Generation: 1,4-Diaminobutan[4]propylamin (N,N'-tetrabis(3-aminopropyl)-1,4-butandiamin) DAB(PA)₄ zur Erniedrigung der Viskosität in Polyamid 6, Polyamid 6,6 und Polybutylenterephthalat (PBT). Während beim Einsatz von DAB(PA)₄ zur Viskositätserniedrigung in Polyamiden die Schlagzähigkeit der erhaltenen Formmassen praktisch unbeeinflusst bleibt (Unterschied < 5%), nimmt die Schlagzähigkeit bei PBT um mehr als 15% ab.

WO-A 95/06081 (= US 5 493 000) beschreibt den Einsatz von dreidimensionalen verzweigten Polymeren mit starren aromatischen Einheiten in Blends mit Polyamid zur Erhöhung der Materialsteifigkeit und der Reißfestigkeit bei gleichzeitiger Reduktion der Viskosität und der Reißdehnung der Blends.

EP-A 0 994 157 (= AU 6 233 499 A) beschreibt den Einsatz von hochverzweigten, auf Aromaten basierenden Polymeren, die bei der Caprolactam-Polykondensation zugesetzt und damit einpolymerisiert werden. Dabei zeigen Zusammensetzungen aus Polyamiden, bei denen hochverzweigte Polymere einpolymerisiert wurden, bessere mechanische Eigenschaften und bessere Fließfähigkeiten als Vergleichszusammensetzungen ohne die hochverzweigten Komponenten. Beschrieben wird die Zugabe der hochverzweigten Polymere während der Polymerisation, nicht aber die Zugabe zu einer Polymerschmelze.

Grundsätzlich lassen sich Verbesserungen der Fließfähigkeit von Polyamiden auch durch Zusatz von Phenolen, Bisphenolen und ähnlichen niedermolekularen Additiven erzielen. EP-A 0 240 887 (= US 5 212 224) beschreibt Formmassen aus Polyamid, einem Kautschuk und einem Bisphenol, die eine durch das Additiv hervorgerufene verbesserte Fließfähigkeit aufzeigen.

In DE-A 32 48 329 (= US 4 628 069) wird der Zusatz von phenolischen Verbindungen zu Polyamid zur Verringerung der Wasseraufnahme beschrieben.

Neben der Verbesserung der Fließfähigkeit ist es oft erwünscht, die Zähigkeit der Materialien zu verbessern. Dazu können den eingesetzten Thermoplasten zusätzlich weitere Copolymere auf Basis von Ethen und Acrylsäure- oder Methacrylsäureestern zugesetzt werden, die eine Verbesserung der Zähigkeit bewirken.

DE-A 2 758 568 (= US 4 362 846) und DE-A 2 801 585 (= US 4 362 846) beschreiben die Zähmodifizierung von Polyamiden mit acrylatgepfropften Polyolefinen. Es wird betont, dass die Verwendung der acrylatmodifizierten Polyolefine zu einer Erhöhung der Schmelzeviskosität führt.

EP-A 1 191 067 (= US 6 759 480) beschreibt die Zähmodifizierung von Thermoplasten, unter anderem von Polyamid und Polybutylenterephthalat, durch eine Mischung aus einem Copolymerisat aus Ethen mit einem nichtreaktiven Alkylacrylat sowie einem Copolymerisat aus Ethen mit einem Acrylat mit zusätzlicher reaktiver Gruppe. Die Fließfähigkeit der Formmassen wird nicht diskutiert.

US 6,713,596 B1 offenbart Formmassen, enthaltend Polyamid und ein weiteres Copolymerisat aus Ethylen und Alkyl(meth)acrylat, die nicht durch Vermischen der Polymer Komponenten hergestellt werden.

EP 1038 921 A1 offenbart Polyamid Formmassen, enthaltend ein Copolymerisat aus Ethylen/butylacrylat mit einem Melt Flow Index (MFI) von 0,1 bis 0,5 g/10 min.

WO 2005/121249 A ist eine am 22.12.2005 veröffentlichte PCT-Anmeldung und beansprucht die Priorität von DE 10 2005 009 200 A1.

Diese ältere Anmeldung zeigt Formmassen enthaltend (A) 99,9 bis 10 Gew.-Teile mindestens eines teilkristallinen thermoplastischen Polyamids und (B) 0,1 bis 20 Gew.-Teile mindestens eines Copolymerisats aus mindestens einem Olefin mit mindestens einem Methacrylsäureester oder Acrylsäureester eines aliphatischen Alkohols, wobei der Melt Flow Index (MFI) des Copolymerisats (B) 100 g/10 min nicht unterschreitet.

Weiterhin, offenbart WO 2005/121249 A ein Verfahren zur Herstellung der Polyamid-Formmassen, dadurch gekennzeichnet, dass man die Komponenten in den entsprechenden Gewichts-Anteilen vermischt.

Die Lösung der Aufgabe und somit Gegenstand der Erfindung sind Formmassen enthaltend
A) 99 bis 10 Gew.-Teile mindestens eines teilkristallinen Polyamids und
B) 1 bis 20 Gew.-Teile mindestens eines Copolymerisats aus mindestens einem Olefin mit mindestens einem Methacrylsäureester oder Acrylsäureester eines aliphatischen Alkohols mit 1-4 Kohlenstoffatomen, wobei der Melt Flow Index (MFI) des Copolymerisats B) zwischen 80 und 900 g/10 min liegt,
dadurch gekennzeichnet, dass der MFI bei 190°C und mit einem Prüfgewicht von 2,16 kg gemessen bzw. bestimmt wird, das Polyamid durch Polykondensation oder durch hydrolytische Polymerisation hergestellt wurde und die Alkylgruppe des Methacrylsäure- oder Acrylsäureesters ausgewählt ist aus der Gruppe Methyl, Ethyl, n-Propyl, i-Propyl, n-Butyl, s-Butyl, i-Butyl, t-Butyl.

Überraschend wurde gefunden, dass Mischungen aus mindestens einem teilkristallinen thermoplastischen Polyamid mit Copolymerisaten von Olefinen mit Methacrylsäureestern oder Acrylsäureestern aliphatischer Alkohole mit 1 bis 4 Kohlenstoffatomen mit einem MFI zwischen 80 und 900 g/10 min, zur gewünschten Erniedrigung der Schmelzviskosität der daraus hergestellten erfindungsgemäßen Formmassen führen. Im Vergleich zu Formmassen ohne Copolymerisat B) zeigen die erfindungsgemäßen Formmassen keine signifikanten Einbußen, sondern teilweise sogar Verbesserungen bei Eigenschaften wie Tieftemperatur-Schlagzähigkeit, Hydrolysebeständigkeit, Dichte, Oberflächenqualität. Die Formmassen sind zum Einsatz in der Dünnwandtechnologie hervorragend geeignet.

Als Komponente A) enthalten die Zusammensetzungen erfindungsgemäß mindestens ein teilkristallines thermoplastisches Polyamid.

Die erfindungsgemäß einzusetzenden Polyamide können nach verschiedenen Verfahren hergestellt und aus sehr unterschiedlichen Bausteinen synthetisiert werden und im speziellen Anwendungsfall allein oder in Kombination mit Verarbeitungshilfsmitteln, Stabilisatoren, polymeren Legierungspartnern (z.B. Elastomeren) oder auch Verstärkungsmaterialien (wie z.B. mineralischen Füllstoffen oder Glasfasern) zu Werkstoffen mit speziell eingestellten Eigenschaftskombinationen ausgerüstet werden. Geeignet sind auch Blends mit Anteilen von anderen Polymeren, z.B. von Polyethylen, Polypropylen, ABS (Acrylnitril-Butadien-Styrol-Copolymer), wobei ggf. ein oder mehrere Kompatibilisatoren eingesetzt werden können. Die Eigenschaften der Polyamide lassen sich durch Zusatz von Elastomeren verbessern, z. B. im Hinblick auf die Schlagzähigkeit von z. B. verstärkten Polyamiden. Die Vielzahl der Kombinationsmöglichkeiten ermöglicht eine sehr große Zahl von Produkten mit unterschiedlichsten Eigenschaften.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die für die erfindungsgemäßen Formmassen einzusetzenden Polyamide werden über die Polykondensation in der Schmelze hergestellt. In diesem Rahmen wird auch die hydrolytische Polymerisation von Lactamen als Polykondensation verstanden.

Erfindungsgemäß bevorzugt als Komponente A) einzusetzende Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden können.

Als Edukte kommen aliphatische und/oder aromatische Dicarbonsäuren wie Adipinsäure, 2,2,4-und 2,4,4-Trimethyladipinsäure, Azelainsäure, Sebazinsäure, Isophthalsäure, Terephthalsäure, aliphatische und/oder aromatische Diamine wie z.B. Tetramethylendiamin, Hexamethylendiamin, 1,9-Nonandiamin, 2,2,4- und 2,4,4-Trimethylhexamethylendiamin, die isomeren Diamino-dicyclohexylmethane, Diaminodicyclohexylpropane, Bis-aminomethyl-cyclohexan, Phenylendiamine, Xylylendiamine, Aminocarbonsäuren wie z.B. Aminocapronsäure, bzw. die entsprechenden Lactame in Betracht. Copolyamide aus mehreren der genannten Monomeren sind eingeschlossen.

Erfindungsgemäß besonders bevorzugt werden Caprolactame, ganz besonders bevorzugt ε-Caprolactam sowie die meisten auf PA6, PA66 und auf anderen aliphatischen und/oder aromatischen Polyamiden bzw. Copolyamiden basierenden Compounds, bei denen auf eine Polyamidgruppe in der Polymerkette 3 bis 11 Methylengruppen kommen, eingesetzt.

Die erfindungsgemäß als Komponente A) einzusetzenden teilkristallinen Polyamide können auch im Gemisch mit anderen Polyamiden und/oder weiteren Polymeren eingesetzt werden.

Den Polyamiden können übliche Additive wie z.B. Entformungsmittel, Stabilisatoren und/oder Fließhilfsmittel in der Schmelze zugemischt oder auf der Oberfläche aufgebracht werden.

Als Komponente B) enthalten die erfindungsgemäßen Zusammensetzungen Coplymerisate, bevorzugt statistische Copolymerisate aus mindestens einem Olefin, bevorzugt α-Olefin und mindestens einem Methacrylsäureester oder Acrylsäureester eines aliphatischen Alkohols mit 1 bis 4 Kohlenstoffen, wobei der MFI des Copolymerisats B) zwischen 80 und 900 g/10 min liegt. In einer bevorzugten Ausführungsform besteht das Copolymerisat B) zu weniger als 4 Gew.-%, besonders bevorzugt zu weniger als 1,5 Gew.-% und ganz besonders bevorzugt zu 0 Gew.-% aus Monomerbausteinen, die weitere reaktive funktionelle Gruppen (ausgewählt aus der Gruppe umfassend Epoxide, Oxetane, Anhydride, Imide, Aziridine, Furane, Säuren, Amine, Oxazoline) enthalten.

Geeignete Olefine, bevorzugt α-Olefine als Bestandteil der Copolymerisate B) weisen bevorzugt zwischen 2 und 10 Kohlenstoff-Atomen auf und können unsubstituiert oder mit einer oder mehreren aliphatischen, cycloaliphatischen oder aromatischen Gruppen substituiert sein.

Bevorzugte Olefine sind ausgewählt aus der Gruppe umfassend Ethen, Propen, 1-Buten, 1-Penten, 1-Hexen, 1-Octen, 3-Methyl-1-penten. Besonders bevorzugte Olefine sind Ethen und Propen, ganz besonders bevorzugt ist Ethen.

Ebenfalls geeignet sind Mischungen der beschriebenen Olefine.

In einer weiter bevorzugten Ausführungsform werden die weiteren reaktiven funktionellen Gruppen (ausgewählt aus der Gruppe umfassend Epoxide, Oxetane, Anhydride, Imide, Aziridine, Furane, Säuren, Amine, Oxazoline) des Copolymerisates B) außschließlich über die Olefine in das Copolymer B) eingebracht.

Der Gehalt des Olefins am Copolymerisat B) liegt zwischen 50 und 95 Gew.-%, bevorzugt zwischen 61 und 93 Gew.-%.

Das Copolymerisat B) wird weiterhin definiert durch den zweiten Bestandteil neben dem Olefin. Als zweiter Bestandteil sind Alkylester der Acrylsäure oder Methacrylsäure geeignet, deren Alkylgruppe ausgewählt ist aus der Gruppe umfassend Methyl, Ethyl, n-Propyl, i-Propyl, n-Butyl, s-Butyl, i-Butyl, t-Butyl. Bevorzugt ist die Alkylgruppe des Methacrylsäure- oder Acrylsäureesters ausgewählt aus der Gruppe umfassend Ethyl, n-Propyl, i-Propyl, n-Butyl, s-Butyl, i-Butyl, t-Butyl. Ganz besonders bevorzugt weist die Alkylgruppe des Methacrylsäure- oder Acrylsäureesters 4 Kohlenstoffatome auf und umfasst die Gruppe n-Butyl, s-Butyl, i-Butyl und t-Butyl. Insbesondere bevorzugt ist der Acrylsäure-n-butylester.

Erfindungsgemäß besonders bevorzugt sind Copolymerisate B), bei denen das Olefin mit Acrylsäurebutylester, insbesondere Acrylsäure-n-butylester copolymerisiert wird.

Ebenfalls geeignet sind Mischungen der beschriebenen Acrylsäure- oder Methacrylsäurester. Bevorzugt ist hierbei die Verwendung von mehr als 50 Gew.-%, besonders bevorzugt mehr als 90 Gew.-% und ganz besonders bevorzugt die Verwendung von 100 Gew.-% Acrylsäurebutylester bezogen auf die Gesamtmenge an Acrylsäure- und Methacrylsäurester in Copolymerisat B).

In einer weiter bevorzugten Ausführungsform werden die weiteren reaktiven funktionellen Gruppen (ausgewählt aus der Gruppe umfassend Epoxide, Oxetane, Anhydride, Imide, Aziridine, Furane, Säuren, Amine, Oxazoline) des Copolymerisates B) ausschließlich über die Acrylsäure- oder Methacrylsäurester in das Copolymer B) eingebracht.

Der Gehalt der Acrylsäure- oder Methacrylsäureester am Copolymerisat B) liegt bevorzugt zwischen 5 und 50 Gew.-%, besonders bevorzugt zwischen 7 und 39. Gew.-%.

Geeignete Copolymerisate B) zeichnen sich neben der Zusammensetzung durch das niedrige Molekulargewicht aus. Dementsprechend sind für die erfindungsgemäßen Formmassen nur Copolymerisate B) geeignet, die einen MFI-Wert gemessen bei 190°C und einer Belastung von 2,16 kg von mindestens 50 g / 10 min, bevorzugt zwischen 80 und 900 g/ 10 min aufweisen.

Geeignete Copolymerisate als Komponente B) können beispielsweise ausgewählt sein aus der Gruppe der von der Fa. Arkema (vormals Atofina) unter dem Markennamen Lotryl^{®} angebotenen Materialien, die gewöhnlich als Schmelzkleber Verwendung finden.

In einer bevorzugten Ausführungsform können die erfindungsgemäßen Polyamid-Formmassen zusätzlich zu den Komponenten A) und B) eine oder mehrere der Komponenten der Reihe C), D), E), F) und G) enthalten.

In einer solchen bevorzugten Ausführungsform können also zusätzlich zu den Komponenten A) und B) noch gegebenenfalls
C) 0,001 bis 70 Gew.-Teile, vorzugsweise 5 bis 50 Gew.-Teile, besonders bevorzugt 9 bis 47 Gew.-Teile mindestens eines Füll- oder Verstärkungsstoffes in den thermoplastischen Polyamid-Formmassen enthalten sein.

Als Füllstoff oder Verstärkungsstoff können aber auch Mischungen aus zwei oder mehr unterschiedlichen Füllstoffen und/oder Verstärkungsstoffen beispielsweise auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasern und/oder Glasfasern eingesetzt werden. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Besonders bevorzugt werden mineralische teilchenförmige Füllstoffe auf der Basis von Talk, Wollastonit, Kaolin und/oder Glasfasern eingesetzt.

Insbesondere für Anwendungen, in denen Isotropie bei der Dimensionsstabilität und eine hohe thermische Dimensionsstabilität gefordert wird, wie beispielsweise in Kfz-Anwendungen für Karosserieaußenteile, werden bevorzugt mineralische Füllstoffe eingesetzt, insbesondere Talk, Wollastonit oder Kaolin.

Besonders bevorzugt werden ferner auch nadelförmige mineralische Füllstoffe eingesetzt. Unter nadelförmigen mineralischen Füllstoffen wird erfindungsgemäß ein mineralischer Füllstoff mit stark ausgeprägtem nadelförmigen Charakter verstanden. Als Beispiel seien nadelförmige Wollastonite genannt. Bevorzugt weist das Mineral ein Länge : Durchmesser - Verhältnis von 2:1 bis 35:1, besonders bevorzugt von 3:1 bis 19:1, insbesondere bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm, bestimmt mit einem CILAS GRANULOMETER.

Wie bereits oben beschrieben kann der Füllstoff und/oder Verstärkungsstoff gegebenenfalls oberflächenmodifiziert sein, beispielsweise mit einem Haftvermittler bzw. Haftvermittlersystem z.B. auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Die erfindungsgemäß besonders bevorzugt einzusetzenden Glasfasern, die im Allgemeinen einen Faserdurchmesser zwischen 7 und 18 µm, bevorzugt zwischen 9 und 15 µm haben, werden als Endlosfasern oder als geschnittene oder gemahlene Glasfasern zugesetzt. Die Fasern können mit einem geeigneten Schlichtesystem und einem Haftvermittler bzw. Haftvermittlersystem z.B. auf Silanbasis ausgerüstet sein.

Gebräuchliche Haftvermittler auf Silanbasis für die Vorbehandlung sind Silanverbindungen beispielsweise der allgemeine Formel (I)

(I) (X-(CH₂)_{q})ₖ-Si-(O-CᵣH₂ᵣ₊₁)₄₋ₖ

in der die Substituenten folgende Bedeutung haben:
X für NH₂-, HO- oder 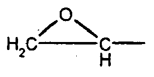 steht,
q für eine ganze Zahl von 2 bis 10, bevorzugt 3 bis 4 steht,
r für eine ganze Zahl von 1 bis 5, bevorzugt 1 bis 2 steht und
k für eine ganze Zahl von 1 bis 3, bevorzugt 1 steht.

Bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d97- bzw. d50-Wert aufweisen, als die ursprünglich eingesetzten Füllstoffe. Die Glasfasern können bedingt durch die Verarbeitung zur Formmasse bzw. Formkörper in der Formmasse bzw. im Formkörper kürzere Längenverteilungen als ursprünglich eingesetzt aufweisen.

In einer alternativen bevorzugten Ausführungsform können die Polyamid-Formmassen zusätzlich zu den Komponenten A) und B), und/oder C) noch gegebenenfalls

### D) 0,001 bis 65 Gew.-Teile mindestens eines Flammschutzadditivs enthalten.

Als Flammschutzmittel der Komponente D) können handelsübliche organische Halogenverbindungen mit Synergisten oder handelsübliche organische Stickstoffverbindungen oder organisch/anorganische Phosphorverbindungen einzeln oder im Gemisch eingesetzt werden. Auch mineralische Flammschutzadditive wie Magnesiumhydroxid oder Ca-Mg-Carbonat-Hydrate (z.B. DE-A 4 236 122(= CA 210 9024 A1)) können eingesetzt werden. Ebenso kommen Salze aliphatischer oder aromatischer Sulfonsäuren in Frage. Als halogenhaltige, insbesondere bromierte und chlorierte Verbindungen seien beispielhaft genannt: Ethylen-1,2-bistetrabromphthalimid, epoxidiertes Tetrabrombisphenol-A-Harz, Tetrabrombisphenol-A-oligocarbonat, Tetrachlorbisphenol-A-oligocarbonat, Pentabrompolyacrylat, bromiertes Polystyrol und Decabrom-diphenylether. Als organische Phosphorverbindungen sind z.B. die Phosphorverbindungen gemäß WO-A 98/17720 (= US 6 538 024) geeignet, wie z.B. Triphenylphosphat (TPP), Resorcinol-bis-(diphenylphosphat) (RDP) und die daraus abgeleiteten Oligomere sowie Bisphenol-A-bis-diphenylphosphat (BDP) und die daraus abgeleiteten Oligomere, ferner organische und anorganische Phosphonsäurederivate und deren Salze, organische und anorganische Phosphinsäurederivate und deren Salze, insbesondere Metalldialkylphosphinate wie z.B. Aluminium-tris[dialkylphosphinate] oder Zink-bis[dialkylphosphinate], außerdem roter Phosphor, Phosphite, Hypophosphite, Phospinoxide, Phosphazene, Melaminpyrophosphat und deren Mischungen. Als Stickstoffverbindungen kommen solche aus der Gruppe der Allantoin-, Cyanursäure-, Dicyandiamid, Glycouril-, Guanidin-Ammonium- und Melaminderivate, bevorzugt Allantoin, Benzoguanamin, Glykouril, Melamin, Kondensationsprodukte des Melamins z.B. Melem, Melam oder Melom bzw. höher kondensierte Verbindungen dieses Typs und Addukte des Melamins mit Säuren wie z.B. mit Cyanursäure (Melamincyanurat), Phosphorsäure (Melaminphosphat) oder kondensierten Phosphorsäuren (z.B. Melaminpolyphosphat) in Frage. Als Synergisten sind z.B. Antimonverbindungen, insbesondere Antimontrioxid, Natriumantimonat und Antimonpentoxid, Zinkverbindungen wie z.B. Zinkborat, Zinkoxid, Zinkphosphat und Zinksulfid, Zinnverbindungen wie z.B. Zinnstannat und Zinnborat sowie Magnesiumverbindungen wie z.B. Magnesiumoxid, Magnesiumcarbonat und Magensiumborat geeignet. Auch können dem Flammschutzmittel sogenannte Kohlenstoffbildner wie z.B. Phenol-Formaldehydharze, Polycarbonate, Polyphenylether, Polyimide, Polysulfone, Polyethersulfone, Polyphenylosulfide und Polyetherketone sowie Antitropfmittel wie Tetrafluorethylenpolymerisate zugesetzt werden.

In einer weiteren alternativen bevorzugten Ausführungsform können die Polyamid-Formmassen zusätzlich zu den Komponenten A) und B), und/oder C) und/oder D) noch gegebenenfalls

### E) 0,001 bis 80 Gew.-Teile, besonders bevorzugt 2 bis 25 Gew.-Teile mindestens eines Elastomermodifikators enthalten.

Die als Komponente E) einzusetzenden Elastomermodifikatoren umfassen ein oder mehrere Pfropfpolymerisate von
E.1 5 bis 95 Gew.-%, vorzugsweise 30 bis 90 Gew.-%, wenigstens eines Vinylmonomeren auf
E.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage E.2 hat im allgemeinen eine mittlere Teilchengröße (d₅₀-Wert) von 0,05 bis 10 µm, vorzugsweise 0,1 bis 5 µm, besonders bevorzugt 0,2 bis 1 µm.

### Monomere E. 1 sind vorzugsweise Gemische aus

E.1.1 50 bis 99 Gew.-% Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie z.B. Methylmethacrylat, Ethylmethacrylat) und
E.1.2 1 bis 50 Gew.-% Vinylcyanide (ungesättigte Nitrile wie Acrylnitril und Methacrylnitril) und/oder (Meth)Acrylsäure-(C₁-C₈)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere E.1.1 sind ausgewählt aus mindestens einem der Monomere Styrol, α-Methylstyrol und Methylmethacrylat, bevorzugte Monomere E.1.2 sind ausgewählt aus mindestens einem der Monomere Acrylnitril, Maleinsäureanhydrid und Methylmethacrylat.

Besonders bevorzugte Monomere sind E.1. Styrol und E.1.2 Acrylnitril.

Für die in den Elastomermodifikatoren E) einzusetzenden Pfropfpolymerisate geeignete Pfropfgrundlagen E.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen E.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß E.1.1 und E.1.2), mit der Maßgabe, dass die Glasübergangstemperatur der Komponente E.2 bei <10°C, vorzugsweise bei <0°C, besonders bevorzugt bei <-10°C liegt.

Besonders bevorzugte Propfgrundlagen E.2 sind z.B. ABS-Polymerisate (Emulsions-, Masse- und Suspensions-ABS), wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage E.2 beträgt bevorzugt mindestens 30 Gew.-%, besonders bevorzugt mindestens 40 Gew.-% (in Toluol gemessen).

Die Elastomermodifikatoren bzw. Pfropfpolymerisate E) werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke basieren auf Pfropfgrundlagen E2, die vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-akyl-ester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind z.B.

Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Weitere geeignete Pfropfgrundlagen gemäß E.2 sind Silikonkautschuke mit pfropfaktiven Stellen, wie sie in den DE-A 3 704 657 (= US 4 859 740), DE-A 3 704 655 (= US 4 861 831), DE-A 3 631 540 (= US 4 806 593) und DE-A 3 631 539 (= US 4 812 515) beschrieben werden.

Neben Elastomermodifikatoren, die auf Propfpolymeren beruhen, können ebenfalls nicht auf Propfpolymeren basierende Elastomermodifikatoren als Komponente E) eingesetzt werden, die Glasübergangstemperaturen < 10°C, vorzugsweise < 0°C, besonders bevorzugt < -20°C aufweisen. Hierzu können z.B. Elastomere mit einer Blockcopolymerstruktur gehören. Hierzu können weiterhin z.B. thermoplastisch aufschmelzbare Elastomere gehören. Beispielhaft und bevorzugt sind hier EPM-, EPDM- und/oder SEBS-Kautschuke genannt.

In einer weiteren alternativen bevorzugten Ausführungsform können die Polyamid-Formmassen zusätzlich zu den Komponenten A) und B), und/oder C) und/oder D) und/oder E) noch gegebenenfalls

### F) 0,001 bis 10 Gew.-Teile, bevorzugt 0,05 bis 3 Gew.-Teile weitere übliche Additive enthalten.

Übliche Additive im Sinne der vorliegenden Erfindung sind z.B. Stabilisatoren (zum Beispiel UV-Stabilisatoren, Thermostabilisatoren, Gammastrahlenstabilisatoren), Antistatika, Fließhilfsmittel, Entformungsmittel, weitere Brandschutzadditive, Emulgatoren, Nukleierungsmittel, Weichmacher, Gleitmittel, Farbstoffe, Pigmente und Additive zur Erhöhung der elektrischen Leitfähigkeit. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden.

Als Stabilisatoren können zum Beispiel sterisch gehinderte Phenole, Hydrochinone, aromatische sekundäre Amine wie z.B. Diphenylamine, substituierte Resorcine, Salicylate, Benzotriazole und Benzophenone, sowie verschiedene substituierte Vertreter dieser Gruppen und deren Mischungen eingesetzt werden.

Als Pigmente bzw. Farbstoffe können z.B. Titandioxid, Zinksulfid, Ultramarinblau, Eisenoxid, Ruß, Phthalocyanine, Chinacridone, Perylene, Nigrosin und Anthrachinone eingesetzt werden.

Als Nukleierungsmittel können z.B. Natrium- oder Calciumphenylphosphinat, Aluminiumoxid, Siliziumdioxid sowie bevorzugt Talkum eingesetzt werden.

Als Gleit- und Entformungsmittel können z.B. Esterwachse, Pentaerytritoltetrastearat (PETS), langkettige Fettsäuren (z.B. Stearinsäure oder Behensäure) und Ester, deren Salze (z.B. Ca- oder Zn-Stearat) sowie Amidderivate (z.B. Ethylen-bis-stearylamid) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse eingesetzt werden.

Als Weichmacher können zum Beispiel Phthalsäuredioctylester, Phthalsäuredibenzylester, Phthalsäurebutylbenzylester, Kohlenwasserstofföle, N-(n-Butyl)benzolsulfonamid eingesetzt werden.

Als Additive zur Erhöhung der elektrischen Leitfähigkeit können Ruße, Leitfähigkeitsruße, Carbonfibrillen, nanoskalige Grafit- und Kohlenstofffasern, Graphit, leitfähige Polymere, Metallfasern sowie andere übliche Additive zur Erhöhung der elektrischen Leitfähigkeit zugesetzt werden. Als nanoskalige Fasern können bevorzugt sogenannte "single wall Kohlenstoff-Nanotubes" oder "multi wall Kohlenstoff-Nanotubes" (z.B. der Firma Hyperion Catalysis) eingesetzt werden.

In einer weiteren alternativen bevorzugten Ausführungsform können die Polyamid-Formmassen zusätzlich zu den Komponenten A) und B), und/oder C), und/oder D), und/oder E), und/oder F) noch gegebenenfalls

### G) 0,5 bis 30 Gew.-Teile, bevorzugt 1 bis 20 Gew.-Teile, besonders bevorzugt 2 bis 10 Gew.-Teile und höchst bevorzugt 3 bis 7 Gew.-Teile Verträglichkeitsvermittler (Compatibilizer /Kompatibilisator) enthalten.

Als Verträglichkeitsvermittler werden vorzugsweise thermoplastische Polymere mit polaren Gruppen eingesetzt.

Erfindungsgemäß kommen demgemäß Polymere zum Einsatz, die
G.1 ein vinylaromatisches Monomer,
G.2 wenigstens ein Monomer ausgewählt aus der Gruppe C₂ bis C₁₂-Alkylmethacrylate, C₂ bis C₁₂-Alkylacrylate, Methacrylnitrile und Acrylnitrile und
G.3 α,β-ungesättigte Komponenten enthaltend Dicarbonsäureanhydride enthalten.

Vorzugsweise werden als Komponente G.1, G.2 und G.3 Terpolymere der genannten Monomeren eingesetzt. Demgemäß kommen vorzugsweise Terpolymere von Styrol, Acrylnitril und Maleinsäureanhydrid zum Einsatz. Diese Terpolymere tragen insbesondere zur Verbesserung der mechanischen Eigenschaften, wie Zugfestigkeit und Reißdehnung bei. Die Menge an Maleinsäureanhydrid in dem Terpolymer kann in weiten Grenzen schwanken. Vorzugsweise beträgt die Menge 0,2 bis 5 Mol-%. Besonders bevorzugt sind Mengen zwischen 0,5 und 1,5 Mol-%. In diesem Bereich werden besonders gute mechanische Eigenschaften bezüglich Zugfestigkeit und Reißdehnung erzielt.

Das Terpolymer kann nach bekannter Weise hergestellt werden. Eine geeignete Methode ist das Lösen von Monomerkomponenten des Terpolymers, z. B. des Styrols, Maleinsäureanhydrids oder Acrylnitrils in einem geeigneten Lösemittel, z. B. Methylethylketon (MEK). Zu dieser Lösung werden ein oder gegebenenfalls mehrere chemische Initiatoren hinzugesetzt. Geeignete Initiatoren sind z.B. Peroxide. Sodann wird das Gemisch für mehrere Stunden bei erhöhten Temperaturen polymerisiert. Anschließend werden das Lösemittel und die nicht umgesetzten Monomere in an sich bekannter Weise entfernt.

Das Verhältnis zwischen der Komponente G.1 (vinylaromatisches Monomer) und der Komponente G.2, z.B. dem Acrylnitrilmonomer in dem Terpolymer liegt vorzugsweise zwischen 80:20 und 50:50.

Als vinylaromatisches Monomer G.1 ist Styrol besonders bevorzugt.

Für die Komponente G.2 ist besonders bevorzugt Acrylnitril geeignet.

Als Komponente G.3 ist besonders bevorzugt Maleinsäureanhydrid geeignet.

Beispiele für erfindungsgemäß einsetzbare Verträglichkeitsvermittler G) sind in den EP-A 0 785 234 (= US 5 756 576) und EP-A 0 202 214 (= US 4 713 415) beschrieben. Erfindungsgemäß bevorzugt sind insbesondere die in der EP-A 0 785 234 genannten Polymere.

Die Verträglichkeitsvermittler können in Komponente G) allein oder in beliebiger Mischung untereinander enthalten sein.

Eine weitere, als Verträglichkeitsvermittler besonders bevorzugte Substanz ist ein Terpolymer von Styrol und Acrylnitril im Gewichtsverhältnis 2,1:1 enthaltend 1 Mol-% Maleinsäureanhydrid. Komponente G) wird insbesondere dann eingesetzt, wenn die Formmasse Pfropfpolymerisate, wie unter E) beschrieben, enthält.

Erfindungsgemäß ergeben sich folgende bevorzugte Kombinationen der Komponenten:
A,B; A,B,C; A,B,D; A,B,E; A,B,F; A,B,G; A,B,C,D; A,B,C,E; A,B,C,F; A,B,C,G; A,B; A,B,C; A,B,D; A,B,E; A,B,F; A,B,G; A,B,C,D; A,B,C,E; A,B,C,F; A,B,C,G; A,B,D,E; A,B,D,F; A,B,D,G; A,B,E,F; A,B,E,G; A,B,F,G; A,B,C,D,E; A,B,C,D,F; A,B,C,D,G; A,B,C,E,F; A,B,C,E,G; A,B,C,F,G; A,B,E,F,G; A,B,D,E,F; A,B,D,E,G; A,B,D,F,G; A,B,C,D,E,F; A,B,C,D,E,G; A,B,C,D,F,G; A,B,D,E,F,G; A,B,C,E,F,G; A,B,C,D,E,F,G.

Die vorliegende Erfindung betrifft ferner die Herstellung der erfindungsgemäßen Polyamid-Formmassen. Dies erfolgt nach bekannten Verfahren durch Vermischen der Komponenten in den entsprechenden Gewichtsanteilen. Vorzugsweise geschieht das Mischen der Komponenten bei Temperaturen von 220 bis 330°C durch gemeinsames Vermengen, Vermischen, Kneten, Extrudieren oder Verwalzen der Komponenten. Es kann vorteilhaft sein, einzelne Komponenten vorzumischen. Es kann weiterhin vorteilhaft sein, Formteile oder Halbzeuge aus einer bei Raumtemperatur (bevorzugt 0 bis 40°C) hergestellten physikalischen Mischung (Dryblend) vorgemischter Komponenten und/oder einzelner Komponenten direkt herzustellen.

Gegenstand der Erfindung sind ferner die aus den erfindungsgemäßen Formmassen enthaltend
B) 99 bis 10 Gew.-Teile mindestens eines teilkristallinen Polyamids und
B) 1 bis 20 Gew.-Teile mindestens eines Copolymerisats aus mindestens einem Olefin mit mindestens einem Methacrylsäureester oder Acrylsäureester eines aliphatischen Alkohols mit 1-4 Kohlenstoffatomen, wobei der Melt Flow Index (MFI) des Copolymerisats B) zwischen 80 und 900 g/10 min liegt,
wobei der MFI bei 190°C und mit einem Prüfgewicht von 2,16 kg gemessen bzw. bestimmt wird, das Polyamid durch Polykondensation oder durch hydrolytische Polymerisation hergestellt wurde und die Alkylgruppe des Methacrylsäure- oder Acrylsäureesters ausgewählt ist aus der Gruppe Methyl, Ethyl, n-Propyl, i-Propyl, n-Butyl, s-Butyl, i-Butyl, t-Butyl, herzustellenden Formteile, Formkörper oder Halbzeuge.

Die erfindungsgemäßen Formmassen zeigen im Vergleich zum Stand der Technik überraschenderweise folgende Vorteile:
- deutlich verbesserte Fließfähigkeit, insbesondere bei für die Thermoplastverarbeitung relevanten Scherraten
- deutlich reduzierter Fülldruck bei der Spritzgießverarbeitung
- verbesserte Tieftemperatur-Zähigkeit
- geringere Dichte
- verbesserte Hydrolysebeständigkeit
- verbesserte Oberflächenqualität der Formteile.

Die erfindungsgemäßen Polyamid-Formmassen können nach üblichen Verfahren, beispielsweise durch Spritzguss oder Extrusion, zu Formteilen oder Halbzeugen verarbeitet werden. Beispiele für Halbzeuge sind Folien und Platten. Besonders bevorzugt ist die Spritzgießverarbeitung.

Die erfindungsgemäß aus den Polyamid-Formmassen herzustellenden Formteile, Formkörper oder Halbzeuge können klein- oder großteilig sein und beispielsweise in der Kraftfahrzeug-, Elektro-, Elektronik-, Telekommunikations-, Informationstechnologie-, Computerindustrie, im Haushalt, Sport, in der Medizin oder der Unterhaltungsindustrie angewandt werden. Insbesondere können die erfindungsgemäßen Polyamid-Formmassen für Anwendungen eingesetzt werden, für die eine hohe Schmelzefließfähigkeit erforderlich ist. Ein Beispiel für derartige Anwendungen ist die sogenannte Dünnwandtechnologie, bei der die aus den Formmassen herzustellenden Formteile Wanddicken von weniger als 2,5 mm, bevorzugt weniger als 2,0 mm, besonders bevorzugt weniger als 1,5 mm und am meisten bevorzugt weniger als 1,0 mm aufweisen. Ein weiteres Beispiel für derartige Anwendungen ist die Zykluszeitverkürzung z.B. durch Absenkung der Verarbeitungstemperatur. Ein weiteres Anwendungsbeispiel ist die Verarbeitung der Formmassen über sogenannte Multiwerkzeuge, bei denen über ein Angusssystem mindestens 4 Formen, bevorzugt mindestens 8 Formen, besonders bevorzugt mindestens 12 Formen, am meisten bevorzugt mindestens 16 Formen in einem Spritzgussvorgang gefüllt werden.

Ferner können Formteile aus den erfindungsgemäßen Formmassen für Teile des Kühlkreislaufs und/oder des Ölkreislaufs von Kraftfahrzeugen eingesetzt werden.

### Beispiele:

### Eingesetzt wurden:

Polyamid 6: Durethan^{®} B29, Handelsprodukt der Lanxess Deutschland GmbH, Leverkusen, Deutschland, mit einer relativen Lösungsviskosität von 2,9 (gemessen in m-Kresol bei 25°C)
Glasfaser: Mit silanhaltigen Verbindungen beschlichtete Glasfaser mit einem Durchmesser von 11 µm (CS 7928, Handelsprodukt der Lanxess N.V., Antwerpen, Belgien)
Lotryl^{®} 28 BA 175: Copolymerisat aus Ethen und Acrylsäure-n-butylester mit einem Ethen-Anteil von 70-74 Gewichts-% und einem MFI von 175 (Handelsprodukt der Atofina Deutschland, Düsseldorf; seit Oktober 2004 Arkema GmbH, Düsseldorf)

Die Zusammensetzungen auf Basis von PA6 wurden auf einem Zweiwellenextruder des Typs ZSK32 (Werner und Pfleiderer) bei Massetemperaturen von 270 bis 285°C zu Formmassen compoundiert, die Schmelze wurde in ein Wasserbad ausgetragen und anschließend granuliert.

Die Prüfkörper für die in der Tabelle aufgeführten Untersuchungen wurden auf einer Spritzgießmaschine des Typs Arburg 320-210-500 bei einer Massetemperatur von 280 °C und einer Werkzeugtemperatur von 80 °C verspritzt:
- Schulterstäbe (3 mm Dicke gemäß ISO 527)
- Prüfstäbe 80 x 10 x 4 mm³ (gem. ISO 178)
- Platten 60 x 60 x 2 mm³

Der Fülldruck ist ein Verarbeitungskennwert, der beim Spritzgießen von Schulterstäben bestimmt wurde. Der Fülldruck ist der angussnah gemessene Werkzeuginnendruck, der aufgebracht wird, um die Werkzeugkavität zu füllen. Er ist in der Druckverlaufkurve ein charakteristischer Knickpunkt zwischen der Formfüll- und Verdichtungsphase und lässt sich über die Prozessdatenerfassung ermitteln.

Bis auf die Schmelzeviskositätsmessungen und die Bestimmung der Fließspirallänge wurden die in der Tabelle aufgeführten Untersuchungen an o.g. Prüfkörpern durchgeführt:
Zugversuch zur Ermittlung von Zugmodul und Bruchspannung nach DIN EN ISO 527-2/1A.
Bruchdehnung: Dehnbarkeit bestimmt nach DIN EN ISO 527-2/1A.
Biegeversuch zur Ermittlung von Biegemodul, Biegefestigkeit, Randfaserdehnung und Biegespannung nach DIN EN ISO 178.
Schlagzähigkeit: IZOD-Methode nach ISO 180/1U bei Raumtemperatur und bei - 30 °C.

Schwindung: Zur Bestimmung der Schwindungseigenschaften werden normierte Platten der Dimension 60 mm x 60 mm x 2 mm (ISO 294-4) spritzgegossen. Durch anschließende Vermessung wird die Längs- und Querschwindung sowohl für die Verarbeitungs- als auch für die Nachschwindung ermittelt. Die Gesamtschwindung setzt sich aus der Verarbeitungsschwindung und der Nachschwindung additiv zusammen.

Fließspirallänge: An den Compounds aus Beispiel und Vergleichsbeispiel wurde die Fließfähigkeit in einer Fließspirale (Dicke 3 mm) bei einer Massetemperatur von 280 °C und einer Werkzeugtemperatur von 80 °C getestet. Gemessen wurde der Fließweg in cm (Fließspirallänge).

Die Bestimmung der Schmelzviskosität erfolgte nach DIN 54811 / ISO 11443 bei der angegebenen Scherrate und Temperatur mit dem Gerät Viscorobo 94.00 der Fa. Göttfert nach Trocknung des Granulates bei 80 °C für 48 Stunden im Vakuumtrockner.

Die Dichtebestimmung erfolgte nach dem Auftriebsverfahren an Probekörpern nach DIN EN ISO 1183-1.

Oberfläche: Die Oberfläche wurde begutachtet und visuell eingeschätzt an Prüfkörpern der Dimensionen 60 mm x 60 mm x 2 mm. Entscheidend für die Beurteilung waren die Kriterien Glanz, Glätte, Farbe und einheitliche Struktur der Oberfläche.

**Tabelle**

| | | Vergleich | Beispiel |
|---|---|---|---|
| Polyamid 6 | [%] | 69,82 | 64,82 |
| Glasfaser | [%] | 30,0 | 30,0 |
| Lotryl^{®} 28 BA 175 | [%] | - | 5,0 |
| Mikrotalk | [%] | 0,02 | 0,02 |
| Montanesterwachs | [%] | 0,16 | 0,16 |
| Fülldruck | [bar] | 312 | 235 |
| Schmelzviskosität (260 °C, 1000 s⁻¹) | [Pas] | 219 | 133 |
| Schmelzviskosität (260 °C, 1500 s⁻¹) | [Pas] | 176 | 102 |
| Schmelzviskosität (280 °C, 1000 s⁻¹) | [Pas] | 162 | 100 |
| Schmelzviskosität (280 °C, 1500 s⁻¹) | [Pas] | 135 | 80 |
| Schmelzviskosität (300 °C, 1000 s⁻¹) | [Pas] | 112 | 81 |
| Schmelzviskosität (300 °C, 1500 s⁻¹) | [Pas] | 97 | 66 |
| Fließspirallänge | [cm] | 44 | 52 |
| Izod-Schlagzähigkeit (ISO 180/1U, RT) | [kJ/m²] | 78 | 71 |
| Izod-Schlagzähigkeit (ISO 180/1U, -30 °C) | [kJ/m²] | 64 | 69 |
| Gesamtschwindung (4 h/120 °C) | [%] | | |
| längs | | 0,32 | 0,31 |
| quer | | 0,76 | 0,75 |

| Biegeversuch: | | | |
|---|---|---|---|
| Biegespannung | [MPa] | 242 | 221 |
| Randfaserdehnung | [%] | 4,6 | 4,4 |
| Biegefestigkeit | [MPa] | 264 | 236 |
| Biegemodul | [MPa] | 8200 | 7510 |

| Zugversuch: | | | |
|---|---|---|---|
| Bruchspannung | [MPa] | 172 | 154 |
| Bruchdehnung | [%] | 3,9 | 3,7 |
| Zugmodul | [MPa] | 9270 | 8720 |
| Dichte | [g/cm³] | 1,36 | 1,33 |
| Oberflächenqualität | | gut | sehr gut |

## Patentansprüche

1. Formmassen enthaltend
A) 99 bis 10 Gew.-Teile mindestens eines teilkristallinen Polyamids und
B) 1 bis 20 Gew.-Teile mindestens eines Copolymerisats aus mindestens einem Olefin mit mindestens einem Methacrylsäureester oder Acrylsäsureester eines aliphatischen Alkohols mit 1-4 Kohlenstoffatomen, wobei der Melt Flow Index (MFI) des Copolymerisats B) zwischen 80 und 900 g/10 min liegt,
**dadurch gekennzeichnet, dass** der MFI bei 190°C und mit einem Prüfgewicht von 2,16 kg gemessen bzw. bestimmt wird, das Polyamid durch Polykondensation oder durch hydrolytische Polymerisation hergestellt wurde und die Alkylgruppe des Methacrylsäure- oder Acrylsäureesters ausgewählt ist aus der Gruppe Methyl, Ethyl, n-Propyl, i-Propyl, n-Butyl, s-Butyl, i-Butyl, t-Butyl.

2. Formmassen gemäß Anspruch 1, **dadurch gekennzeichnet, dass** das Copolymerisat B) zu weniger als 4 Gew.-% aus Monomerbausteinen besteht, die weitere reaktive funktionelle Gruppen ausgewählt aus der Gruppe umfassend Epoxide, Oxetane, Anhydride, Imide, Aziridine, Furane, Säuren, Amine, Oxazoline enthalten.

3. Formmassen gemäß der Ansprüche 1 oder 2, **dadurch gekennzeichnet, dass** diese zusätzlich zu A) und B) gegebenenfalls eine oder mehrere Komponente(n) der Reihe
C) 0,001 bis 70 Gew.-Teile mindestens eines Füll- oder Verstärkungsstoffes,
D) 0,001 bis 65 Gew.-Teile mindestens eines Flammschutzadditivs,
E) 0,001 bis 80 Gew.-Teile mindestens eines Elastomermodifikators,
F) 0,001 bis 10 Gew.-Teile weiterer üblicher Additive
G) 0,5 bis 30 Gew.-Teile Verträglichkeitsvermittler
enthalten.

4. Verfahren zur Herstellung der Polyamid-Formmassen gemäß den Ansprüchen 1 bis 3, **dadurch gekennzeichnet, dass** man die Komponenten in den entsprechenden Gewichtsanteilen vermischt.

5. Formteile, Formkörper oder Halbzeuge erhältlich durch Spritzguss oder Extrusion der Formmassen gemäß den Ansprüchen 1 bis 3.

6. Multiwerkzeuge erhältlich durch Füllen von mindestens 4 Formen mit Formmassen gemäß den Ansprüchen 1 bis 3 in einem Spritzgussvorgang über ein Angusssystem.

7. Verwendung der Formmassen gemäß den Ansprüchen 1 bis 3 in der Dünnwandtechnologie.

8. Verwendung der Formteile, Formkörper oder Halbzeuge gemäß Anspruch 5 oder der Multiwerkzeuge gemäß Anspruch 6 in der Elektro-, Elektronik-, Telekommunikations-, Kraftfahrzeug-, Computerindustrie, im Sport, in der Medizin, im Haushalt oder in der Unterhaltungsindustrie.

9. Verwendung der Formteile, Formkörper oder Halbzeuge gemäß Anspruch 5 für Teile des Kühlkreislaufs und/oder des Ölkreislaufs von Kraftfahrzeugen.

## Claims

1. Moulding compositions comprising
A) from 99 to 10 parts by weight of at least one semicrystalline polyamide and
B) from 1 to 20 parts by weight of at least one copolymer composed of at least one olefin with at least one methacrylic ester or acrylic ester of an aliphatic alcohol having from 1 to 4 carbon atoms, the melt flow index (MFI) of the copolymer B) being from 80 to 900 g/10 min,
**characterized in that** the MFI is measured or determined at 190°C and with a test weight of 2.16 kg, the polyamide has been prepared via polycondensation or via hydrolytic polymerization, and the alkyl group of the methacrylic or acrylic ester has been selected from the group of methyl, ethyl, n-propyl, isopropyl, n-butyl, sec-butyl, isobutyl and tert-butyl.

2. Moulding compositions according to Claim 1, **characterized in that** less than 4% by weight of the copolymer B) is composed of monomer units which contain further reactive functional groups selected from the group consisting of epoxides, oxetanes, anhydrides, imides, aziridines, furans, acids, amines, oxazolines.

3. Moulding compositions according to Claim 1 or 2, **characterized in that** these also, if appropriate, comprise, in addition to A) and B), one or more components of the following series:
C) from 0.001 to 70 parts by weight of at least one filler or reinforcing material,
D) from 0.001 to 65 parts by weight of at least one flame retardant additive,
E) from 0.001 to 80 parts by weight of at least one elastomer modifier,
F) from 0.001 to 10 parts by weight of other conventional additives,
G) from 0.5 to 30 parts by weight of compatibilizer.

4. Process for preparation of the polyamide moulding compositions according to Claims 1 to 3, **characterized in that** the appropriate proportions by weight of the components are mixed.

5. Mouldings or semifinished products obtainable via injection moulding or extrusion of the moulding compositions according to Claims 1 to 3.

6. Multitooling systems obtainable by charging moulding compositions according to Claims 1 to 3 to at least four moulds in an injection moulding procedure by way of a runner system.

7. Use of the moulding compositions according to Claims 1 to 3 in thin-wall technology.

8. Use of the mouldings or semifinished products according to Claim 5, or of the multitooling systems according to Claim 6, in the electrical, electronics, telecommunications, motor vehicle, or computer industry, in sports, in medicine, in the household or in the entertainment industry.

9. Use of the mouldings or semifinished products according to Claim 5 for parts of the cooling circulation system and/or of the oil circulation system of motor vehicles.

## Revendications

1. Masses de moulage, contenant
A) 99 à 10 parties en poids d'au moins un polyamide partiellement cristallin et
B) 1 à 20 parties en poids d'au moins un copolymère d'au moins une oléfine avec au moins un ester d'acide méthacrylique ou un ester d'acide acrylique d'un alcool aliphatique comprenant 1-4 atomes de carbone, où l'indice de fluage (MFI) du copolymère B) se situe entre 80 et 900 g/10 min,
**caractérisées en ce que** le MFI est mesuré ou, selon le cas, déterminé à 190°C et avec un poids de test de 2,16 kg, le polyamide a été préparé par polycondensation ou par polymérisation hydrolytique et le groupe alkyle de l'ester de l'acide méthacrylique ou acrylique est choisi dans le groupe méthyle, éthyle, n-propyle, i-propyle, n-butyle, s-butyle, i-butyle, t-butyle.

2. Masses de moulage selon la revendication 1, **caractérisées en ce que** le copolymère B) est constitué à raison de moins de 4% en poids d'éléments monomères qui contiennent d'autres groupes fonctionnels réactifs choisis dans le groupe comprenant les époxydes, les oxétanes, les anhydrides, les imides, les aziridines, les furannes, les acides, les amines, les oxazolines.

3. Masses de moulage selon les revendications 1 ou 2, **caractérisées en ce qu'**elles contiennent, en plus de A) et B), le cas échéant un ou plusieurs composant(s) de la série
C) 0,001 à 70 parties en poids d'au moins une substance de remplissage ou de renforcement,
D) 0,001 à 65 parties en poids d'au moins un additif retardateur des flammes,
E) 0,001 à 80 parties en poids d'au moins un modificateur élastomère,
F) 0,001 à 10 parties en poids d'autres additifs usuels,
G) 0,5 à 30 parties en poids de promoteur de compatibilité.

4. Procédé pour la préparation de masses de moulage polyamide selon les revendications 1 à 3, **caractérisé en ce qu'**on mélange les composants dans les proportions pondérales correspondantes.

5. Pièces moulées, corps moulés ou produits semi-finis pouvant être obtenus par moulage par injection ou par extrusion des masses de moulage selon les revendications 1 à 3.

6. Outils multiples pouvant être obtenus par remplissage d'au moins 4 formes avec des masses de moulage selon les revendications 1 à 3 dans un processus de moulage par injection via un système d'alimentation.

7. Utilisation des masses de moulage selon les revendications 1 à 3 dans la technologie à parois minces.

8. Utilisation des pièces moulées, des corps moulés ou des produits semi-finis selon la revendication 5 ou des outils multiples selon la revendication 6 dans l'industrie électrique, électronique, des télécommunications, des véhicules automobiles, informatique, dans le sport, en médecine, dans les ménages ou dans l'industrie des loisirs.

9. Utilisation des pièces moulées, des corps moulés ou des produits semi-finis selon la revendication 5 comme pièces pour le circuit de refroidissement et/ou du circuit d'huile de véhicules automobiles.
